# EUROPÄISCHE PATENTSCHRIFT

(11) **EP 0 567 992 B1**
(45) Veröffentlichungstag und Bekanntmachung des Hinweises auf die Patenterteilung: **10.10.2001**
(21) Anmeldenummer: 93106792.0
(22) Anmeldetag: 27.04.1993
(51) Int. Cl.: G06F 17/60, G08G 1/127

(54) **Verfahren zur Überwachung des Transports von Gütern zu vorbestimmten Abnahmestellen**
Method for monitoring the transport of goods to predetermined removal stations
Méthode de surveillance du transport de biens vers des lieux de déchargement prédéterminés

(30) Priorität: 29.04.1992 DE 4214067
(43) Veröffentlichungstag der Anmeldung: 03.11.1993
(73) Patentinhaber: Wanko Unternehmenslogistik GmbH, 83404 Ainring (DE)
(72) Erfinder: Wanko, Heinrich, 8229 Ainring (DE)
(74) Vertreter: Bardehle, Heinz, Dipl.-Ing.

(56) Entgegenhaltungen:
- LOGISTICS TODAY Bd. 11, Nr. 2 , März 1992 , UK Seiten 14 - 15 R. PEEL 'Tracking Transport Movements'
- IEEE PLANS '92 - POSITION LOCATION AND NAVIGATION SYMPOSIUM "500 YEARS AFTER COLUMBUS - NAVIGATION CHALLENGES OF TOMORROW" 1. Januar 1992 Seiten 509 - 515 XP000344344 J. MCLELLAN ET AL 'The NavTrax Fleet Management System'
- JAPAN COMPUTER QUARTERLY Nr. 83 , 1990 , JP Seiten 23 - 32 T. SEKITA 'The Physical Distribution Information Network in the Home-Delivery Business'
- INTERNATIONALES VERKEHRSWESEN Bd. 44, Nr. 4 , April 1992 , DARMSTADT, DE Seiten 148 - 152 XP000297031 G. WAGNER AT AL 'Viele Lkw-Fahrten könnten gespart werden'
- COMPUTER GRAPHICS WORLD, SEITEN 34 - 35, 37 - 39, 41 - 42 Bd. 13, Nr. 5 , Mai 1990 , USA M. SENA 'Computer-Aided Dispatching - Digital maps aid emergency response and fleet management'

## Beschreibung

Die Erfindung bezieht sich auf ein Verfahren zur Überwachung des Transports von Gütern zu vorbestimmten Abnahmestellen mittels Transportfahrzeugen innerhalb eines räumlich ausgedehnten Gebietes, z.B. eines Staats, unter automatischer Feststellung der Fahrzeit und Rückmeldung an eine zentrale Überwachungsstelle, wobei in der Überwachungsstelle in einem Zentralrechner pro Transportfahrzeug ein individueller, Abnahmestellen enthaltender Fahrweg hinsichtlich der betreffenden Teil-Strecken, Fahr- und Standzeiten als Tourenfahrplan gespeichert wird, der einem Bordrechner im Transportfahrzeug übermittelt und in diesem als Soll-Tour gespeichert wird.

Ein Verfahren zur automatischen Feststellung der jeweils zurückgelegten Wegstrecke und Erfassung dieser Wegstrecke in einem Bordrechner wird bereits in der Praxis angewendet, und zwar insbesondere von Spediteuren, die z.B. Transportfahrzeuge über längere Strecken mehrere Tage neue Möbel zu Warenhäusern antransportieren lassen. Meist ist es in derartigen Fällen erforderlich, die Abnahmestellen, also z.B. die Warenhäuser, am Tage innerhalb bestimmter Stunden anzufahren, in denen das für die Entladung zuständige Personal zur Verfügung steht. Wegen der Kosten derartiger Transporte ist es erforderlich, die jeweiligen Fahrwege so zusammenzustellen, daß das betreffende Transportfahrzeug optimal ausgenutzt wird, d.h. es sind unnötige Standzeiten soweit wie möglich zu vermeiden, wobei auch die jeweiligen Streckenverhältnisse zu berücksichtigen sind. Die Fahrer der Transportfahrzeuge dieser Spediteure erhalten normalerweise einen Tourenfahrplan, in dem dem Fahrer die Wegstrecke und die jeweiligen Zeitpunkte das An- und Abfahrens bei den einzelnen Abnahmestellen festgehalten sind. Der Fahrer hat sich nach diesem Fahrplan zu richten. Die Einhaltung des Tourenfahrplans wird jedoch häufig durch örtliche Gegebenheiten und unvorhergesehene Ereignisse, z.B. Straßenprobleme oder Wartezeiten wegen anderer Fahrzeuge an Abnahmestellen, gestört, was dann das richtige Abarbeiten des verbleibenden Restes des Tourenfahrplans unter Umständen unmöglich macht. Der Fahrer eines derart behinderten Transportfahrzeuges hat zwar normalerweise den Auftrag, Behinderungen an eine Zentrale zu melden, um gegebenenfalls von dort einen abgeänderten Tourenfahrplan zu erhalten. Eine derartige Rückfrage ist jedoch häufig für den unter Arbeits- und Zeitdruck stehenden Fahrer schwierig oder unmöglich. Außerdem ist nicht immer gewährleistet, daß in der Zentrale sofort ein abgeänderter Tourenfahrplan unter Berücksichtigung der neuen Gegebenheiten ausgearbeitet werden kann. Die Folge davon ist, daß ein derart aufgehaltenes Transportfahrzeug vorgesehene nachfolgende Abnahmestellen nicht rechtzeitig anfahren kann. Daraus resultieren Verzögerungen im weiteren Transport der Güter zu den Abnahmestellen, so daß unter Umständen vorgesehene folgende Touren nicht mehr durchgeführt werden können.

In der Veröffentlichung "Internationales Verkehrswesen", April 1992, Seiten 148 bis 152 wird in dem Aufsatz "Viele Lkw-Fahrten könnten gespart werden" auf verschiedene Möglichkeiten von Leit- und Navigationssystemen zur Verbesserung des Verkehrsgeschehens im Nah- und Fernverkehr hingewiesen. Der dabei besonders herausgestellte "Travelpilot" der Firma Bosch basiert auf einer Verbindung des Fahrzeugs mit einer Verkehrsleitzentrale. Dabei werden drei unterschiedliche Konzepte erwähnt. Erstens überträgt man über einen Radio- oder Funkkanal Informationen über Straßen, die im Moment stark belegt sind, so daß ein Rechner diese von der Routenberechnung ausnimmt und einen Weg am Stau vorbei ermittelt. Die zweite Möglichkeit besteht darin, die Routensuche zentral in einem Verkehrsleitrechner durchzuführen, wobei den Fahrzeugen ständig aktualisierte Leitempfehlungen übertragen werden. Gemäß der dritten Möglichkeit werden über den UKW-Hörfunk unhörbare digitale Zusatzinformationen zum Fahrzeug übertragen und dort mittels Sprachausgabe in der jeweiligen Muttersprache ausgegeben, wodurch sich der Fahrer seinen Weg dann selbst aussuchen kann. Schließlich wird auch noch auf ein System verwiesen, wonach während der Fahrt immer nur die nächste Kreuzung dem Fahrer angezeigt wird.

Der Erfindung liegt die Aufgabe zugrunde, die oben geschilderten Schwierigkeiten zu beseitigen und im Falle von Verzögerungen dem Fahrer des betreffenden Transportfahrzeugs schnellstens einen Ersatztourenfahrplan zu ermitteln und vorzuschreiben.

Erfindungsgemäß geschieht dies dadurch, daß in dem Bordrechner die Soll-Tour mit die Ist-Tour bildenden Ist-Werten verglichen wird, die als Ist-Teilstrecken und Ist-Zeitpunkte durch die Fahrt des Transportfahrzeugs und eine Uhr ermittelt werden, wobei aus dem ständigen Vergleich der Sollwerte der Soll-Tour mit den Ist-Werten ein Differenzwert ermittelt wird, der bei Überschreiten eines bestimmten Grenzwertes dem Zentralrechner über eine Datenfunkverbindung zwischen dem Transportfahrzeug und der Zentralstelle ein Grenzwertsignal übermittelt, das den im Transportfahrzeug festgestellten Standort und den betreffenden Zeitpunkt enthält, woraufhin der Zentralrechner unter Zugrundelegung des betreffenden Tourenfahrplans diesen in einen Ersatz-Tourenfahrplan abändert und diesen über die Datenfunkverbindung dem Bordrechner übermittelt, welcher Ersatz-Tourenfahrplan in der gleichen Weise hinsichtlich Soll- und Ist-Werte überwacht wird wie der ursprüngliche Tourenfahrplan.

Aufgrund dieser Verfahrensschritte wird die jeweilige Lage eines Transportfahrzeuges im Tourenfahrplan ständig überwacht und im Falle eines den bestimmten Grenzwert überschreitenden Abweichens der Lage des Transportfahrzeuges mittels des Grenzwertsignals wie bei einem Alarm der Zentralrechner verständigt, der dann ohne ein erforderliches Tätigwerden des Fahrers dessen Bordrechner den vom Zentralrechner ermittelten Ersatz-Tourenfahrplan übermittelt, so daß die eingetretene Verzögerung im Ablauf des Tourenfahrplans soweit wie möglich ausgeglichen wird. Im Zentralrechner ist die Lage der in Frage stehenden Abnahmestellen gespeichert, aus der er dann den günstigsten Ersatz-Tourenfahrplan errechnen kann. Auf diese Weise werden sowohl der Fahrer des betreffenden Transportfahrzeuges als auch das Personal in der Überwachungsstelle von unter Umständen komplizierten Überlegungen entlastet und trotz eingetretener Verzögerung das betreffende Transportfahrzeug optimal ausgenutzt.

Wesentlich bei diesem Verfahren ist auch, daß die als bekannte Nachrichtenübermittlung verwendete Datenfunkverbindung nur dann in Anspruch genommen wird, wenn das Überschreiten eines bestimmten Grenzwertes im Bordrechner festgestellt wird. Einerseits werden hierdurch Kosten für die Datenfunkverbindung eingespart, andererseits diese zeitlich immer nur kurz ausgenutzt, so daß sie für viele abgewickelte Tourenfahrpläne zur Verfügung stehen kann. Ein an sich bekanntes Verfahren mit ständiger Überwachung des Standorts der Transportfahrzeuge durch ein bekanntes Satelliten-Standort-Meldesystem ist in bezug auf die Belegung der Datenfunkverbindung wesentlich aufwendiger, da ständig bzw. periodisch in relativ kurzer Zeitabständen die Standorte aller Transportfahrzeuge über Datenfunkverbindungen an die Überwachungsstelle gemeldet werden müssen, wo dann eine Vielzahl von Tourenfahrplänen daraufhin gleichzeitig überwacht werden muß, ob in einem Tourenfahrplan eine unzulässige Abweichung festgestellt wird oder nicht.

Um bei Feststellung einer zu großen Abweichung vom Touren-Fahrplan sicherzustellen, daß für die Erstellung des Ersatz-Tourenfahrplans auch die exakte Lage des betreffenden Transportfahrzeuges berücksichtigt wird, geht man zweckmäßig so vor, daß beim Überschreiten des Grenzwertes eine Satelliten-Standort-Meldung im Bordrechner registriert und dem Grenzwertsignal diese Standort-Meldung hinzugefügt wird, die in die Erstellung des Ersatz-Tourenfahrplans einbezogen wird. Diese Standort-Meldung ist also nur beim Überschreiten des Grenzwertes erforderlich. Die vom Transportfahrzeug aus initiierte Satelliten-Standort-Meldung, also die vom Transportfahrzeug ausgelöste Anfrage beim Satelliten hinsichtlich des Standorts des Transportfahrzeuges, ist bei der heute verfügbaren Satellitentechnik mit keinerlei Kosten verbunden, da die bereits existierenden Satelliten den Standort einer anfragenden Stelle kostenlos bestimmen und übermitteln. Im Falle der ständigen Überwachung des Standortes der Transportfahrzeuge in einer Überwachungsstelle über einen Satelliten muß auf Anfrage von der Überwachungsstelle her der Satellit das jeweils gesuchte Transportfahrzeug erst ermitteln, um daraufhin dessen Standort der Überwachungsstelle mitzuteilen, was kostenpflichtig ist.

Das Verfahren läßt sich dahingehend ausgestalten, daß es eine ständige Optimierung der im Zentralrechner gespeicherten Tourenfahrpläne und Straßennetze hinsichtlich Streckenlänge und Fahrzeit gestattet. Dies geschieht dadurch, daß laufend Satelliten-Standort-Meldungen mit den zugehörigen Zeitpunkten im Bordrechner registriert und dem Zentralrechner zugeführt werden, der diese Daten mit den Daten der betreffenden Soll-Tour oder deren Teilstrecken vergleicht und aufgrund mehrerer Meldungen für die gleichen Ist-Touren bzw. Ist-Teil-Strecken die Soll-Strecken (Entfernungen und Zeiten) den Ist-Strecken anpaßt. Die hierbei erforderlichen Satelliten-Standort-Meldungen werden vom jeweiligen Transportfahrzeug ausgelöst, das wie oben bereits dargelegt, die Standortmeldungen kostenlos erhält und diese dann im Bordrechner registrieren kann. Von dort werden die betreffenden Daten dem Zentralrechner zugeführt, entweder von Zeit zu Zeit über die Datenfunkverbindung oder nach Abwicklung des betreffenden Tourenfahrplans. Im Zentralrechner kann dann durch Vergleich einer Mehrzahl von abgewickelten gleichen Tourenfahrplänen festgestellt werden, ob sich dabei häufig gewisse Abweichungen vom gespeicherten Tourenfahrplan ergeben. In diesem Falle läßt sich dann ohne weiteres der gespeicherte Tourenfahrplan an die wiederholt auftretenden, praxisbedingten Abweichungen anpassen, womit ein entsprechend optimierter Tourenfahrplan erstellt wird.

Anhand der Figuren sei ein Ausführungsbeispiel der Erfindung erläutert.
Es zeigen
Fig. 1 in schematischer Darstellung innerhalb eines räumlichen Gebietes mehrere Streckenpläne von Touren,
Fig. 2 in schematischer Darstellung die Nachrichtenverbindungen zwischen einem Transportfahrzeug und der Überwachungsstelle sowie einem Satelliten.

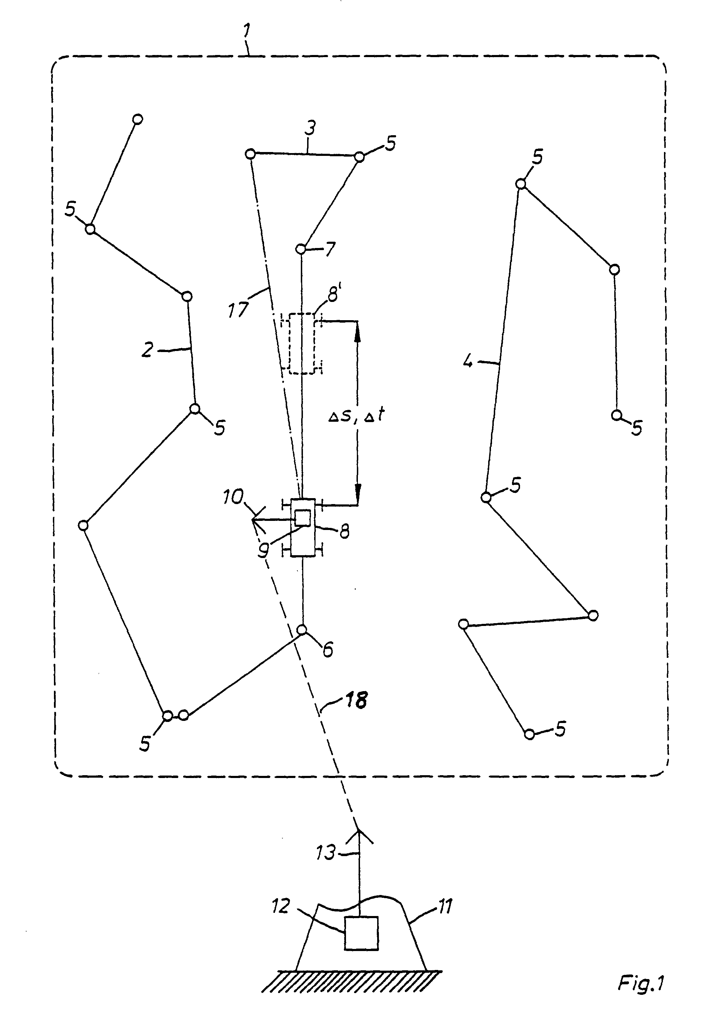

Fig. 1 zeigt ein durch die gestrichelte Linie eingegrenztes größeres Gebiet 1, bei dem es sich zum Beispiel um einen Teil eines Staats handeln kann. In diesem Gebiet sind 3 Touren, 2, 3 und 4 eingezeichnet, die über Teilstrecken zwischen Abnahmestellen 5 verlaufen. Die Abnahmestellen 5 liegen zum Beispiel innerhalb von Ortschaften und können die obenerwähnten Warenhäuser darstellen. In der Tour 3 zwischen den Abnahmestellen 6 und 7 ist das Transportfahrzeug 8 dargestellt, daß sich auf der dazwischen liegende Teilstrecke in Richtung auf die Abnahmestelle 7 zu bewegt. Das Transportfahrzeug 8 ist mit dem Bordrechner 9 versehen, an den die für eine Datenfunkverbindung dienende Antenne 10 angeschlossen ist. Der Bordrechner 9 enthält weiterhin eine Uhr.

In der Fig. 1 ist weiterhin die Überwachungsstelle 11 dargestellt, in der sich der Zentralrechner 12 befindet, an den die Antenne 13 angeschlossen ist. In dem Zentralrechner 12 sind die Tourenfahrpläne für die vom Zentralrechner 12 überwachten Transportfahrzeuge gespeichert. Die Überwachungsstelle kann sich innerhalb des Gebietes 1 oder außerhalb dieses Gebietes befinden. Über die Antennen 10 und 13 wird die oben erwähnte Datenfunkverbindung hergestellt. In Fig. 1 ist in vereinfachter Weise die Datenfunkverbindung als direkte Verbindung zwischen den Antennen 10 und 13 durch die gestrichelte Linie 18 gezeichnet. Normalerweise ist jedoch zwischen die Überwachungsstelle 11 und die einzelne Transportfahrzeuge 8 eine oder mehrere Relaisfunkstellen eingeschaltet, was normalerweise wegen der üblicherweise erheblichen räumlichen Ausdehnung des Gebiets 1 erforderlich ist. In den Bordrechner 9 ist vor Beginn der Tour des Transportfahrzeugs 8 der betr. Tourenfahrplan überspielt worden.

Fig. 1 zeigt im Bereich der Teilstrecke zwischen den Annahmestellen 6 und 7 das gestrichelt gezeichnete Transportfahrzeug 8', durch dessen Lage in dem betreffenden Zeitpunkt die Soll-Stelle des Transportfahrzeuges gezeigt werden soll. Danach liegt also das Transportfahrzeug 8 tatsächlich gegenüber der Soll-Stelle um die Strecke Δs und den Zeitraum Δt zurück. Es sei angenommen, daß es sich dabei um einen derartigen Differenzwert zwischen dem Soll-Wert und dem Ist-Wert innerhalb des betreffenden Tourenfahrplans handelt, daß der im Bordrechner 10 festgehaltene Grenzwert überschritten wird, so daß über die zwischen den Antennen 10 und 13 dann erstellte Datenfunkverbindung das Grenzwertsignal übermittelt wird, das den im Transportfahrzeug 8 festgestellten Standort und den betreffenden Zeitpunkt enthält. Die Ermittlung des Standorts erfolgt dabei in einfacher Weise dadurch, daß unter der Vorraussetzung, daß das Transportfahrzeug 8 seinen im Tourenfahrplan vorgeschriebenen Weg nicht verlassen hat, beispielsweise mittels eines Kilometerzählers (Tachograph) eine entsprechende Wegstrecke festgestellt wird, die dann den Standort des Transportfahrzeuges 8 innerhalb der Genauigkeit des Kilometerzählers definiert, was normalerweise für die Standortbestimmung ausreichend ist.

Es erfolgt dann in der oben geschriebenen Weise eine Ermittlung eines Ersatz-Tourenfahrplans im Zentralrechner 12, der aufgrund der in ihm gespeicherten Tourenfahrpläne und der innerhalb des Gebietes 1 zur Verfügung stehenden Fahrstrecken und Abnahmestellen 5 ermitteln kann, welche innerhalb des betreffenden Tourenfahrplans noch erreichbaren Abnahmestellen angefahren werden können. Wenn dabei einzelne Abnahmestellen übergangen werden müssen, so hält der Zentralrechner 12 dies fest und bezieht diese übergangenen Abnahmestellen gegebenenfalls in neu zu erstellende Tourenfahrpläne ein. Gegebenenfalls wird das Transportfahrzeug 8 im Rahmen des Ersatz-Tourenfahrplans (Ersatz-Tour 17) zu einer Sammelstelle an einer der Abnahmestellen geführt, wo die von ihm transportierten Güter abgeladen und an ein anderes Transportfahrzeug innerhalb eines anderen Tourenfahrplanes übergeben werden.

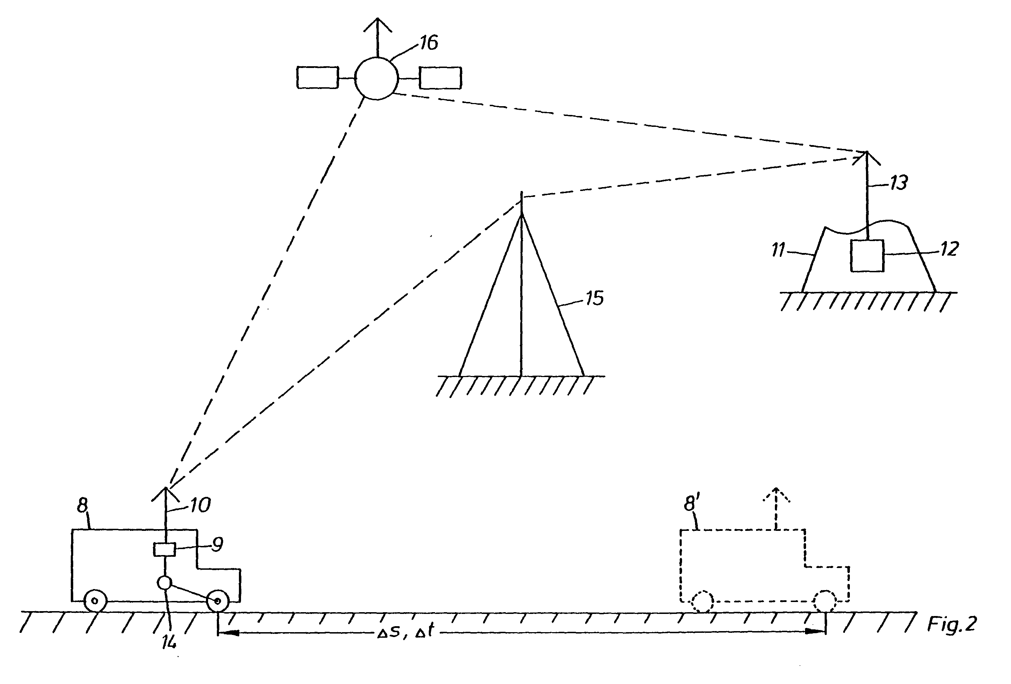

Fig. 2 zeigt in schematischer Darstellung die erforderlichen Nachrichtenverbindungen. Gezeigt ist wieder das Transportfahrzeug 8 mit seinem Bordrechner 9 und angeschlossener Antenne 10 sowie den Tachographen 14, der von einem der Räder des Transportfahrzeuges 8 gesteuert und von dem ein Wegstreckensignal dem Bordrechner zugeführt wird, um daraus den Standort des Transportfahrzeugs 8 zu bestimmen. Weiterhin ist die Soll-Lage 8' des Transportfahrzeuges mit gestrichelten Linien angedeutet. Aus der Ist-Lage des Transportfahrzeuges 8 und der Soll-Lage 8' ist der Differenzwert Δs betreffend die Wegstrecke und Δt betreffen den Zeitpunkt dargestellt. Wenn es sich, wie angenommen wird, dabei um das Überschreiten des bestimmten Grenzwertes handelt, den der Bordrechner 9 gespeichert hat, dann gibt der Bordrechner 9 über seine Antenne 10 ein einsprechendes Grenzwertsignal ab, das über die stationäre Relaisstelle 15 und/oder den Satelliten 16 zu der Überwachungsstelle 11 mit dem Zentralrechner 12 gelangt.

Mittels des Satelliten 16 läßt sich auf Anfrage von dem Transportfahrzeug 8 her dessen Standort bestimmen. Das betreffende Standortsignal wird dem Grenzwertsignal hinzugefügt, so daß der Zentralrechner 12 aus dem Grenzwertsignal eine exakte Meldung hinsichtlich der Lage des Transportfahrzeuges 8 erhält und diese Lage in die Errechnung des Ersatz-Tourenfahrplans einbeziehen kann.

## Patentansprüche

1. Verfahren zur Überwachung des Transports von Gütern zu vorbestimmten Abnahmestellen (5, 6, 7) mittels Transportfahrzeugen (8) innerhalb eines räumlich ausgedehnten Gebietes (1), z. B. eines Staats, unter automatischer Feststellung der Fahrzeit und Rückmeldung an eine zentrale Überwachungsstelle (11), wobei in der Überwachungsstelle (11) in einem Zentralrechner (12) pro Transportfahrzeug (8) ein individueller, Abnahmestellen (5) enthaltender Fahrweg hinsichtlich der betreffenden TeilStrecken, Fahr- und Standzeiten als Tourenfahrplan gespeichert wird, der einem Bordrechner (9) im Transportfahrzeug (8) übermittelt und in diesem als Soll-Tour gespeichert wird, wobei in dem Bordrechner die Soll-Tour mit die Ist-Tour bildenden Ist-Werten verglichen wird, die als Ist-Teil-Strecken und Ist-Zeitpunkte durch die Fahrt des Transportfahrzeugs (8) und eine Uhr ermittelt werden, wobei aus dem ständigen Vergleich der Soll-Werte der Soll-Tour mit den Ist-Werten ein Differenzwert ermittelt wird, der bei Überschreiten eines bestimmten Grenzwertes dem Zentralrechner (12) über eine Datenfunkverbindung (10, 15, 16, 13) zwischen dem Transportfahrzeug (8) und der Zentralstelle (11) ein Grenzwertsignal übermittelt, das den im Transportfahrzeug (8) festgestellten Standort und den betreffenden Zeitpunkt enthält, woraufhin der Zentralrechner (12) unter Zugrundelegung des betreffenden Tourenfahrplans diesen in einen Ersatz-Tourenfahrplan (17) abändert und diesen über die Datenfunkverbindung (13, 15, 16, 10) dem Bordrechner übermittelt, welcher Ersatz-Tourenfahrplan in der gleichen Weise hinsichtlich Soll- und Ist-Werte überwacht wird wie der ursprüngliche Tourenfahrplan.

2. Verfahren nach Anspruch 1, **dadurch gekennzeichnet, daß** bei Überschreiten des Grenzwertes eine Satelliten-Standort-Meldung im Bordrechner (9) registriert und dem Grenzwertsignal diese Standortmeldung hinzugefügt wird, die in die Erstellung des Ersatz-Tourenfahrplans einbezogen wird.

3. Verfahren nach Anspruch 1 oder 2, **dadurch gekennzeichnet, daß** laufend Satelliten-Standort-Meldungen mit den zugehörigen Zeitpunkten im Bordrechner (9) registriert und dem Zentralrechner (12) zugeführt werden, der diese Daten mit den Daten der betreffenden Soll-Tour oder deren Teilstrecken vergleicht und aufgrund mehrerer Meldungen für die gleichen Ist-Touren bzw. Ist-Teil-Strecken die Soll-Strecken den Ist-Strecken anpaßt.

## Claims

1. Method of monitoring the transport of goods to predetermined receiving points (5, 6, 7) by means of transport vehicles (8) within a physically extensive region (1), e.g. a country, with automatic determination of the travelling time and feedback to a central monitoring point (11), an individual travel plan with regard to the relevant part-sections, travelling and standing times and containing receiving points (5) being stored for each transport vehicle (8) in a central computer (12) in the monitoring point (11) as a route travel plan, being transmitted to an on-board computer (9) in the transport vehicle (8) and stored in the latter as a desired route, the desired route being compared in the on-board computer with the actual values which form the actual route, which are determined as actual part-sections and actual times by means of the travel of the transport vehicle (8) and a clock, the continual comparison of the desired values of the desired route with the actual values being used to determine a difference value which, if a specific limiting value is exceeded, a limiting-value signal is transmitted to the central computer (12) via a radio data link (10, 15, 16, 13) between the transport vehicle (8) and the central point (11), the said limiting-value signal containing the location determined in the transport vehicle (8) and the relevant time, whereupon the central computer (12) uses the relevant route travel plan as a basis to modify the latter into a substitute route travel plan (17) and transmits the latter via the radio data link (13, 15, 16, 10) to the on-board computer, the substitute route travel plan being monitored in the same way as the original route travel plan with regard to the desired and actual values.

2. Method according to Claim 1, **characterized in that** if the limiting value is exceeded, a satellite location message is registered in the on-board computer (9), and the limiting-value signal is appended to this location message, which is used in drawing up the substitute route travel plan.

3. Method according to Claim 1 or 2, **characterized in that** satellite location messages together with the associated times are registered continuously in the on-board computer (9) and supplied to the central computer (12), which compares these data with the data of the relevant desired route or its part-sections and, on the basis of a plurality of messages for the same actual routes or actual part-sections, adapts the desired sections to the actual sections.

## Revendications

1. Procédé pour contrôler le transport de marchandises jusqu'à des emplacements prédéterminés de prélèvement (5, 6, 7) à l'aide de véhicules de transport (8) à l'intérieur d'une région (1) étendue spatialement, par exemple d'un état, moyennant la détermination automatique de la durée de déplacement et de la signalisation en retour à un poste central de contrôle (11), selon lequel dans le poste de contrôle (11), un trajet de déplacement individuel contenant des postes de prélèvement (5), est mémorisé pour chaque véhicule de transport (8) dans un ordinateur central (12) en rapport avec les sections partielles, durées de déplacement et temps d'arrêt concernés, sous la forme d'un programme de déplacement en tournée, qui est transmis à un calculateur de bord (9) situé dans le véhicule de transport (8) et est mémorisé dans ce dernier en tant que tournée de consigne, et selon lequel dans le calculateur de bord, la tournée de consigne est comparée à des valeurs réelles formant la tournée réelle et qui sont déterminées en tant que sections partielles réelles et instants réels par le déplacement du véhicule de transport (8) et par une horloge, et selon lequel on détermine à partir de la comparaison permanente des valeurs de consigne de la tournée de consigne aux valeurs réelles une valeur de différence, qui, lors du dépassement d'une certaine valeur de consigne, transmet au calculateur central (12), par l'intermédiaire d'une liaison hertzienne de transmission de données (13, 15, 16, 10) entre le véhicule de transport (8) et le poste central (11), un signal de valeur limite, qui contient le lieu fixé dans le véhicule de transport (8) et l'instant considéré, à la suite de quoi, en se basant sur le programme considéré du trajet de la tournée, le calculateur central (12) modifie ce programme en le programme de déplacement en tournée de remplacement (17) et transmet ce dernier par l'intermédiaire de la liaison hertzienne de transmission de données (13, 15, 16, 10) au calculateur de bord, lequel programme de déplacement en tournée de remplacement est contrôlé en ce qui concerne les valeurs de consigne et les valeurs réelles de la même manière que le programme initial de déplacement en tournée.

2. Procédé selon la revendication 1, **caractérisé en ce que** le cas du dépassement de la valeur limite, une signalisation de lieu par satellite est enregistrée dans le calculateur de bord (9) et cette signalisation de lieu, qui est introduite lors de l'établissement du programme de déplacement en tournée de remplacement, est ajoutée au signal de valeur limite.

3. Procédé selon la revendication 1 ou 2, **caractérisé en ce qu'**en permanence des signalisations de lieu par satellite sont enregistrées avec les instants associés, dans le calculateur de bord (9) et sont envoyées au calculateur central (12), qui compare ces données aux données de la tournée de consigne considérée ou à ses sections partielles, et adapte les sections de consigne aux sections réelles, sur la base de plusieurs signalisations pour les mêmes tournées réelles ou sections de tournées réelles.
